# EUROPEAN PATENT APPLICATION

(11) **EP 1 890 206 A2**
(43) Date of publication of application: **20.02.2008**
(21) Application number: 07000319.9
(22) Date of filing: 09.01.2007
(51) Int. Cl.: G04G 1/06, G04G 5/00

(54) **A time-setting method for a portable device**

(30) Priority: 14.08.2006 CN 200610115578
(71) Applicant: High Tech Computer Corp., Taoyuan City, Taoyuan Hsien (TW)
(72) Inventor: Wang, John C., Taoyuan City Taoyuan Hsien (TW)
(74) Representative: Schwabe - Sandmair - Marx

(57) **Abstract**

A time-setting method for a portable device is provided by the present invention. The time-setting method includes creating a time list based on the time of an incoming-call displayed, and selecting a time item on the time list by an input device. A time interval between two time items is set in the portable device.

## Description

### BACKGROUND

### Field of Invention

The present invention relates to a time-setting method for a portable device. More particularly, the present invention relates to a time-setting method using only one input step.

### Description of Related Art

Portable devices, such as PDAs (personal digital assistants), cellular phones, GPSs (global positioning systems), digital cameras, and media players, are popular consumer electronic items.

A basic requirement in a portable device such as a PDA or mobile phone is to set the time, add an appointment to a calendar, or set an alarm time. Time setting on portable devices currently on the market is activated by several keystrokes or by sequentially pressing forward/backward keys. These methods are time consuming. Usually, the time periods required by users of portable devices are in multiples of half-hour blocks. Therefore, the time-setting methods of several keystrokes or sequentially pressing forward/backward keys are not convenient. There is a need for a time-setting method for portable devices that uses half-hour blocks and that is convenient to input.

### SUMMARY

The present invention provides a time-setting method involving only one key for users of portable devices.

According to one preferred embodiment of the present invention, a time-setting method for a portable device includes creating a time list based on the time of an incoming-call displayed by a time-display device and selecting a time item on the time list by an input device. A time interval between two time items is pre-set in the portable device.

According to another embodiment of the present invention, the time-setting method for a portable device is applied to a mobile communication device to help users manage incoming-calls. This method includes providing a display to users, after receiving a call that offers choices whether or not to answer the call. When the user decides not to answer the call, the display offers the available time for answering the call, wherein the available time for answering the call is determined based on the time of the incoming-call.

It is to be understood that both the foregoing general description and the following detailed description are examples and are intended to provide further explanation of the invention as claimed.

### BRIEF DESCRIPTION OF THE DRAWINGS

These and other features, aspects, and advantages of the present invention will become better understood with regard to the following description, appended claims, and accompanying drawings where:
Fig. 1 shows a flow chart of one preferred embodiment of this invention.
Fig. 2 shows a flow chart of another preferred embodiment of this invention.

### DESCRIPTION OF THE PREFERRED EMBODIMENTS_

Reference will now be made in detail to the present preferred embodiments of the invention, examples of which are illustrated in the accompanying drawings. Wherever possible, the same reference numbers are used in the drawings and the description to refer to the same or like parts.

In the time-setting method for a portable device provided by the disclosed invention, the portable device has at least one input device and at least one time-display device. The time-setting method includes creating a time list based on the present time displayed by the time display device, and selecting a time item on the time list by an input device. A time interval between two time items is pre-set in the portable device.

When the portable device is a mobile communication device, the time item is the available time for answering the call. The available time for answering the call can be seen on a calendar obtainable from the Internet or pre-stored in the portable device. Furthermore, the mobile communication device can inform the caller the available time for answering calls by an image, a graphic symbol, a voice message, or a text message.

The time-setting method of a portable device can be applied to an incoming-call management method for users to manage calls. The incoming-call management method offers several choices for users and callers, and is controlled by the choice of users and callers. Moreover, the incoming-call management method allows the mobile communication device to offer the available time for answering call to callers based on the time of the incoming-call. In addition to mobile communication devices, many portable devices such as notebook computers, PDAs or GPSs can be combined with Internet or telecommunication and become mobile communication devices. Therefore, the present invention can be applied to all these mobile communication devices. The time-setting method for a portable device is explained in the following two embodiments.

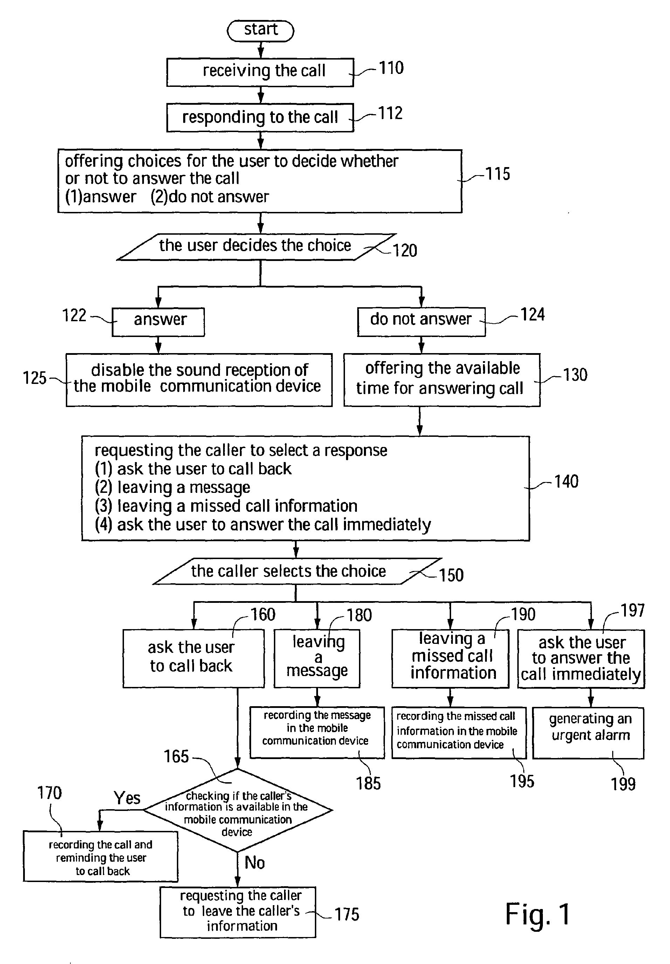

Fig. 1 shows a flow chart of one preferred embodiment of this invention. As shown in the flow chart, the mobile communication device receives a call (step 110), and then responds to the call (step 112) by the incoming-call management method. Then, the incoming-call management method offers choices for the user to decide whether or not to answer the call (step 115). The user decides the choice (step 120) between 'answer' (step 122) and 'do not answer' (step 124). When the user decides 'do not answer' (step 124), the incoming-call management method offers the available time for answering the call (step 130) to the caller, wherein the available time for answering the call is determined by the time of the incoming-call.

In the step 115, in order to prevent the user from being bothered by a ring tone, the incoming-call management method offers choices for the user whether or not to answer the call by a display on the mobile communication device (step 120). The choice of 'answer' can be followed by two choices, 'call waiting' and 'answer immediately'; the choice of 'do not answer' can be followed by two other choices, 'tell the caller line is busy' and 'ignore' (not shown here).

When the user decides to answer the call (step 122), the incoming-call management method can disable the sound reception of the mobile communication device (step 125) or turn the volume lower to prevent the caller from hearing the sound of the user's environment (the user may be in a meeting, at a movie or busy working). In this way, the user's privacy can be protected.

When the user decides not to answer the call (step 124), the mobile communication device offers the available time for answering the call (step 130) to the caller by an image, a graphic symbol, a voice message or a text message. When the mobile communication device offers the available time for answering the call to the caller by an image, the caller needs a device or software to display the image. When the mobile communication device offers the available time for answering the call to the caller by a voice message, the caller will know the available time for answering the call immediately. When the mobile communication device offers the available time for answering the call for the caller by a text message, the caller will receive a text message showing the available time for answering the call.

The user may select the available time for answering the call from several time items offered by the incoming-call management method before the time of the incoming-call. For example, the incoming-call management method offers three time items - 10:00, 10:30 and 11:00 - for the user to select by using a simple input method (such as a single key).

The available time for answering the call can be pre-selected in the mobile communication device. Also, the available time for answering the call can also be obtained from the Internet or from a pre-stored calendar in the mobile communication device.

The time items offered by the incoming-call management method are always in increments of a quarter-hour, a half-hour, or an hour. When the available time for answering a call selected by the user is not in a quarter-hour, half-hour, or an hour increments, the incoming-call management method can still offer a fine-time adjustment to provide precise time items.

The available time for answering calls offered to the caller is the time item right after the incoming-call. For example, the user sets the available time for answering the call to be 10:00, 10:30, and 11:00. The time of the incoming-call is 10:20; thus, the available time for answering the call offered to the caller is 10:30. The other method to set the available time for answering the call is adding a fixed-time interval (such as a quarter-hour, a half-hour or an hour) to the time of the incoming-call so the available time for answering the call will be 10:35, 10:50, or 11:20.

After offering the available time for answering the call (step 130), the incoming-call management method requests the caller to select a response (step 140). At this stage, the response includes items of 'ask the user to call back', 'leaving a message', 'leaving missed-call information' and 'ask the user to answer the call immediately'. Then, the caller makes a choice (step 150). When the caller selects 'ask the user to call back' (step 160), the incoming-call management method checks if the caller's information is available in the mobile communication device (step 165). If the caller's information is available, then the incoming-call management method will record the call and remind the user to call back (step 170) by an image, a graphic symbol, a sound or a vibration. If the caller's information is not available in the mobile communication device, the incoming-call management method will request the caller to leave the caller's information (step 175). The caller's information includes his/her name, phone number, time of incoming-call, and other messages.

When the caller selects 'leaving a message' (step 180), the incoming-call management method records the message in the mobile communication device (step 185). When the caller selects 'leaving missed-call information' (step 190), then the missed-call information is stored in the mobile communication device (step 195) by the incoming-call management method. When the caller selects 'ask the user to answer the call immediately' (step 197), the incoming-call management method generates an urgent alarm (step 199) by an image, a graphic symbol, a sound or a vibration to request the user to answer right away. Therefore, the incoming-call management method offers information for the user to know whether or not the incoming-call is urgent.

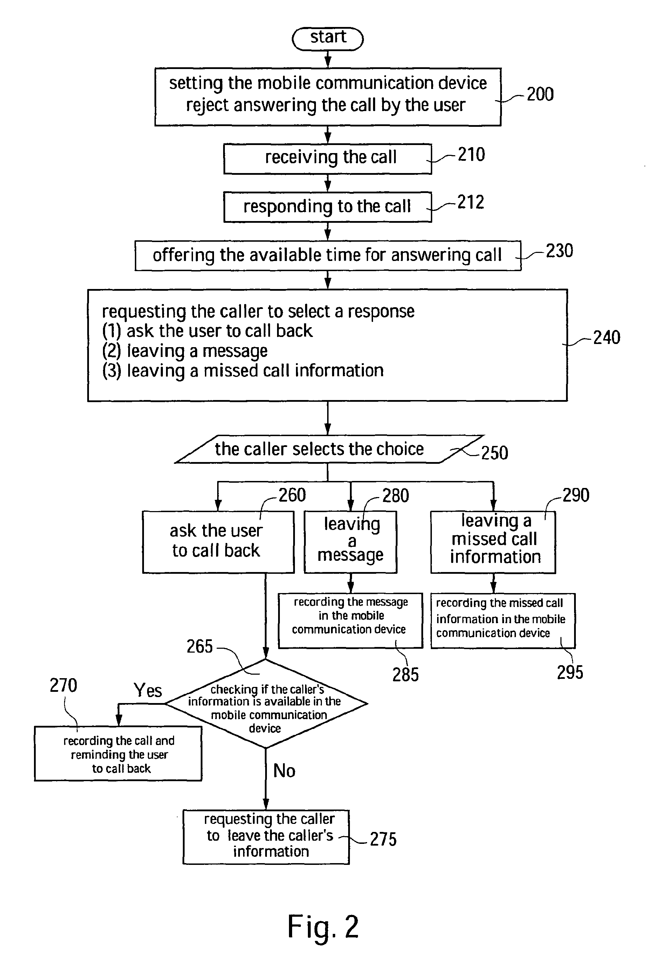

Fig. 2 shows a flow chart of another preferred embodiment of this invention. This embodiment is similar to the preferred embodiment of Fig. 1, but the difference is that the second embodiment presets the mobile communication device to be unavailable to prevent the user from being bothered. Therefore, the user doesn't have interaction with the incoming-call management method, and does not answer the call in the following processes. After the "start" in Fig. 2, the incoming-call management method sets the mobile communication device to be unavailable (step 200); then, the mobile communication device receives a call (step 210) and responds to the call (step 212) by the incoming-call management method. The incoming-call management method offers the available time for answering the call (step 230) to the caller by an image, a graphic symbol, a voice message or a text message. The available time for answering the call is determined based on the time of incoming-call as illustrated in the preferred embodiment in Fig. 1. It will be apparent to those skilled in the art that various modifications and variations can be made.

After offering the available time for answering the call (step 230), the incoming-call management method requests the caller to select a response (step 240). The responses include 'ask the user to call back', 'leave a message' and 'leave missed-call information'. The user does not interact with the incoming-call management method and does not answer the call in this embodiment. Therefore, the response (step 240) to be selected by the caller in this embodiment does not include asking the user to answer the call immediately'.

After being requested to select a response (step 240), the caller makes a choice (step 250). When the caller selects 'ask the user to call back' (step 260), the incoming-call management method checks if the caller's information is available in the mobile communication device (step 265). If the caller's information is available, then the incoming-call management method will record the call and remind the user to call back (step 270) by an image, a graphic symbol, a sound or a vibration. If the caller's information is not available in the mobile communication device, the incoming-call management method will ask the caller to leave the caller's information (step 275). The caller's information includes name, phone number, and the time of the incoming-call or other messages.

When the caller selects 'leaving a message' (step 280), the incoming-call management method records a message in the mobile communication device (step 285). When the caller selects 'leaving missed-call information' (step 290), the incoming-call management method records the missed-call information in the mobile communication device (step 295).

The embodiments described above can help the user set the time conveniently. Moreover, this invention allows the portable device to be more flexible when combined with other systems. For example, when adding schedules to the calendar in PDA, the user can select the time item by using only one key. The time interval between two time items can be adjusted according to users' habits (such as a quarter-hour, a half-hour or an hour) and stored in the PDA.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A time-setting method for a portable device that has at least one input device, the time-setting method comprising:
creating a time list based on the time of an incoming-call, wherein each time item on the time list can be selected by the input device, and a time interval between two time items is set in the portable device; and
selecting the time item to be set in the portable device.

2. The time-setting method as claimed in claim 1, wherein the time item is the available time for answering a call and obtained from a calendar.

3. An incoming-call management method used for a user of a mobile communication device to manage an incoming-call, the incoming-call management method comprising:
(a) receiving the incoming-call from a caller by the mobile communication device;
(b) offering choices for the user whether or not to answer the incoming-call by a display; and
(c) offering at least one available time for the caller to answer a call when the user decides not to answer the incoming-call, wherein the available time for answering the call is determined based on the time of the incoming-call.

4. The incoming-call management method as claimed in claim 3, wherein in step (b), when the user decides to answer the call, the incoming-call management method comprises a function to disable the sound reception of the mobile communication device.

5. The incoming-call management method as claimed in claim 3, wherein the available time for answering the call is selected from at least one time-item offered by the mobile communication device.

6. The incoming-call management method as claimed in claim 3, further comprising:
offering choices for the caller to ask the user to answer the call immediately or not after step (c) by the mobile communication device.

7. The incoming-call management method as claimed in claim 6, further comprising generating an urgent alarm when the caller asks the user to answer the call immediately.

8. An incoming-call management method used for a user of a mobile communication device to manage an incoming-call, the incoming-call management method comprising:
(a) setting the mobile communication device to be unavailable;
(b) receiving the incoming-call from a caller by the mobile communication device; and
(c) offering at least one available time for the caller to answer a call by the mobile communication device, wherein the available time for answering the call is determined based on the time of the incoming-call.

9. The incoming-call management method as claimed in claim 8, wherein in step (a), the user pre-sets at least one available time for answering the call.

10. The incoming-call management method as claimed in claim 8, wherein in step (b), when the user decides to answer the call, the incoming-call management method comprises a function to disable the sound reception of the mobile communication device.

11. The incoming-call management method as claimed in claim 8, wherein the available time for answering the call is selected from at least one time item offered by the mobile communication device.

12. The incoming-call management method as claimed in claim 8, further comprising:
requesting the caller to select a response, wherein the response is selected from the group consisting of asking the user to call back, leaving a message and leaving missed-call information.

13. The incoming-call management method as claimed in claim 12, wherein when the caller selects the response of asking the user to call back, the incoming-call management method further comprises:
checking if the caller's information is available in the mobile communication device;
recording the call and reminding the user to call back when the caller's information is available; and
requesting the caller to leave the caller's information when the caller's information is not available.
